# FASCICULE DE BREVET EUROPEEN

(11) **EP 1 055 572 B1**
(45) Date de publication et mention de la délivrance du brevet: **23.03.2005**
(21) Numéro de dépôt: 00401299.3
(22) Date de dépôt: 12.05.2000
(51) Int. Cl.: B60S 1/60, B60S 1/52, B60Q 1/04

(54) **Ensembles du type comportant un projecteur de véhicule et un dispositif de lavage associé audit projecteur**
Anordnung mit einem Fahrzeugscheinwerfer und die Reinigungsvorrichtung dafür
Assembly comprising a vehicle headlamp and a cleaning device associated therewith

(30) Priorité: 28.05.1999 FR 9906765
(43) Date de publication de la demande: 29.11.2000
(73) Titulaire: VALEO VISION, 93012 Bobigny Cédex (FR)
(72) Inventeur: Lara Castro, Fernando, 93012 Bobigny Cédex (FR); Voll, Marc, 93012 Bobigny Cédex (FR)
(74) Mandataire: Lemaire, Marc

(56) Documents cités:
- DE-A- 4 439 445
- FR-A- 2 651 188
- FR-A- 2 681 031
- US-A- 3 117 727

## Description

La présente invention est relative aux ensembles du type comportant un projecteur de véhicule automobile et un dispositif de lavage associé audit projecteur.

On connaît depuis longtemps des dispositifs de lavage à gicleurs destinés à permettre de nettoyer des projecteurs de véhicules automobiles.

Il a récemment été proposé, notamment dans le brevet US 5 769 528 de la demanderesse ou dans le document FR-A-2 651 188, des blocs de projecteur de véhicules automobiles intégrant des dispositifs de lavage télescopiques.

Les gicleurs de ces dispositifs de lavage sont montés sur des porte-gicleurs à vérin fixés sur le boîtier du projecteur.

En position de repos, le gicleur est escamoté sous un cache mobile qui prolonge la glace du projecteur. Ce cache est une pièce indépendante qui est mobile par rapport au reste de la glace du projecteur et est fixée par rapport au gicleur, de façon à pouvoir être soulevée avec celui-ci lorsque le dispositif de lavage se déploie devant le reste de la glace du projecteur.

Les structures de ce type connues à ce jour obligent à démonter le dispositif de lavage lorsque l'on démonte le projecteur.

Un but de l'invention est de proposer un ensemble dans lequel le dispositif de lavage est escamoté au repos sous un cache qui prolonge la glace du projecteur, qui ne présente pas l'inconvénient précité.

A cet effet, l'invention propose un ensemble comportant un projecteur de véhicule automobile et un dispositif de lavage télescopique associé audit projecteur, le projecteur comportant une glace prolongée par un cache mobile sous lequel le dispositif de lavage est destiné à être escamoté lorsqu'il est au repos, caractérisé en ce qu'il comporte une pièce formant support qui présente d'une part une portion qui est destinée à recevoir au moins en partie le boîtier du projecteur et qui comporte des moyens pour la fixation de ladite pièce sur la carrosserie du véhicule et d'autre part une portée qui est reliée à ladite portion par un décrochement, qui s'étend à l'extrémité de la pièce (3) destinée à être située vers l'avant du projecteur sur le véhicule et qui est en dessous, par rapport au projecteur, de la dite portion (4), des moyens permettant de fixer le dispositif de lavage télescopique sur ladite portée.

Avec un tel montage, le dispositif de lavage et le projecteur du véhicule sont indépendants, de sorte que le projecteur peut être monté et démonté indépendamment du dispositif de lavage.

L'ensemble proposé par l'invention est avantageusement complété par les différentes caractéristiques suivantes prises seules ou selon toutes leurs combinaisons techniquement possibles :
- il comporte une pièce intermédiaire qui présente des moyens qui permettent le centrage du cache mobile par rapport à la glace, des moyens de fixation permettant de fixer ladite pièce sur la pièce formant support ;
- lesdits moyens de fixation sont des moyens qui autorisent un réglage de la position de la pièce intermédiaire par rapport à la pièce formant support ;
- lesdits moyens de fixation comportent au moins une vis dont le filetage coopère avec le filetage de deux écrous destinés à être disposés de part et d'autre d'un orifice de fixation de la pièce intermédiaire et à être serrés contre celle-ci dans une position de réglage donnée ;
- l'orifice présente un jeu de réglage par rapport à la vis ;
- la pièce intermédiaire se termine par un méplat qui présente des moyens de centrage destinés à coopérer avec des moyens de centrage complémentaires que comportent le cache mobile et le reste de la glace ;
- les moyens de centrages comportent des pions de centrage et des trous complémentaires ;
- la pièce intermédiaire est fixée sur le décrochement de la pièce formant support.

D'autres caractéristiques et avantages de l'invention ressortiront encore de la description qui suit. Cette description est purement illustrative et non limitative. Elle doit être lue en regard des dessins annexés sur lesquels
- la figure 1 est une représentation schématique en perspective d'un ensemble conforme à un mode de réalisation possible de l'invention ;
- la figure 2 est une représentation schématique en vue en coupe d'un détail de l'ensemble de la figure 1 ;
- la figure 3 est une représentation schématique en vue de dessus de l'ensemble représenté sur les figures 1 et 2, la figure 2 étant une vue selon la ligne II-II de la figure 3 ;
- la figure 4 est une représentation schématique en vue en coupe selon la ligne IV-IV de la figure 3 ;
- la figure 5 est une représentation schématique en vue en coupe selon la ligne V-V de la figure 3 ;
- la figure 6 est une représentation schématique en vue en coupe selon la ligne VI-VI de la figure 3 ;
- la figure 7 est une représentation schématique en vue en coupe selon la ligne VII-VII de la figure 3.

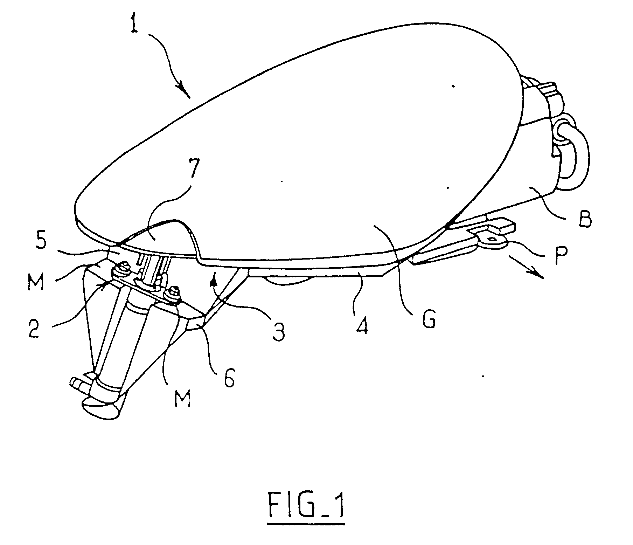

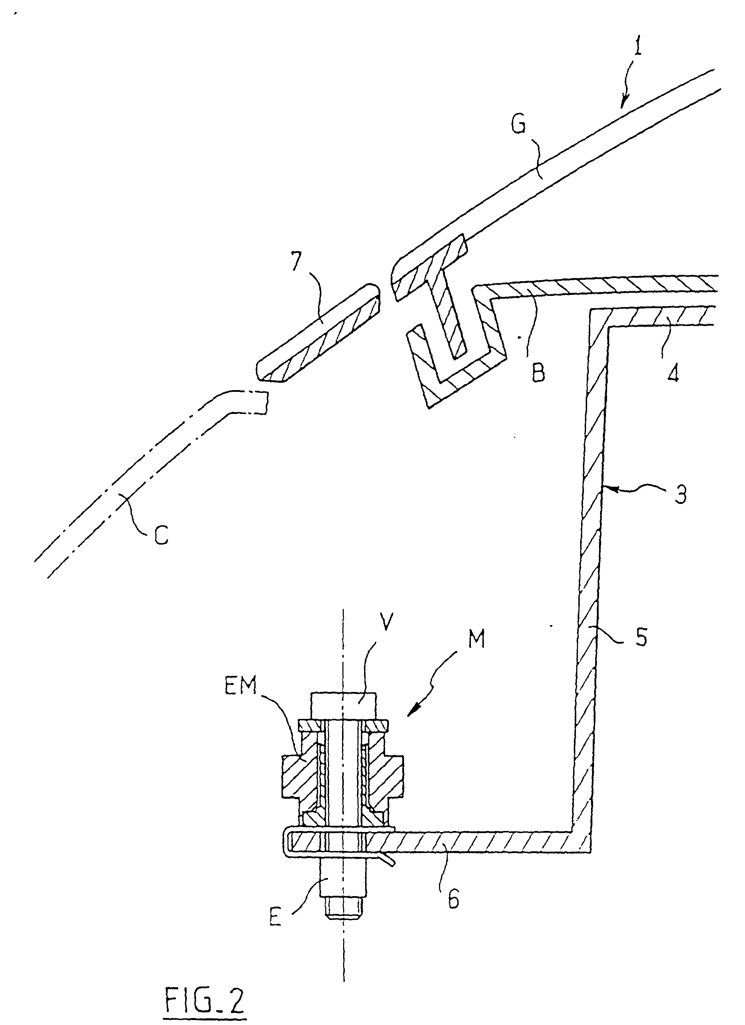

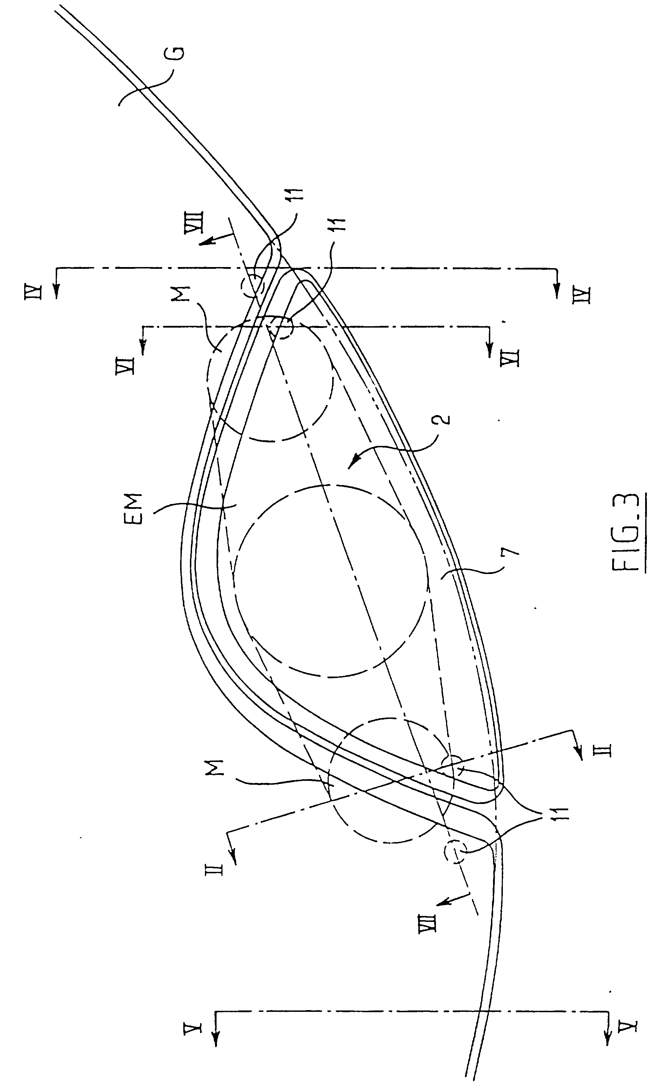

L'ensemble représenté sur les figures 1 à 3 comporte un projecteur référencé par 1 dans son ensemble, ainsi qu'un dispositif de lavage 2.

Le projecteur 1 comporte de façon connue en soi une glace G montée sur un boîtier B recevant un réflecteur (non représenté).

Le dispositif de lavage 2 est quant à lui constitué, de façon également connue en soi, par un gicleur qui est alimenté en liquide de lavage sous pression et qui est monté sur un porte-gicleur télescopique à vérin.

Le projecteur 1 et le dispositif de lavage 2 sont montés sur une même pièce 3 formant support.

Plus particulièrement, cette pièce 3 comporte une partie principale 4 qui constitue une plaque sur laquelle est reçu le boîtier B du projecteur 1

Cette partie principale 4 présente plusieurs pattes latérales P pour la fixation de la pièce 3 formant support sur la carrosserie C du véhicule. le projecteur 1 étant quant à lui fixé indépendamment sur ladite carrosserie C

A son extrémité destinée à être située vers l'avant du projecteur 1, cette partie principale 4 est prolongée par un décrochement 5 qui s'étend vers le bas, sensiblement perpendiculairement à ladite partie principale 4. Ce décrochement 5 se termine par une portée 6 qui s'étend vers l'avant du projecteur et est sensiblement parallèle à la partie principale 4.

Cette portée 6 est destinée à recevoir le dispositif de lavage 2, celui-ci étant fixé sur ladite portée 6 par des moyens M.

Ces moyens M comportent des moyens complémentaires V et E de type vis et écrou qui permettent de fixer une embase EM du porte-gicleur en deux points de fixation de la portée 6.

Au droit du dispositif de lavage 2, la glace G se prolonge par une portion 7 qui constitue un cache mobile en dessous duquel le dispositif de lavage est escamoté lorsqu'il est au repos. Ce cache mobile 7 est fixé par rapport au gicleur et est soulevé avec celui-ci lorsque le dispositif de lavage se déploie.

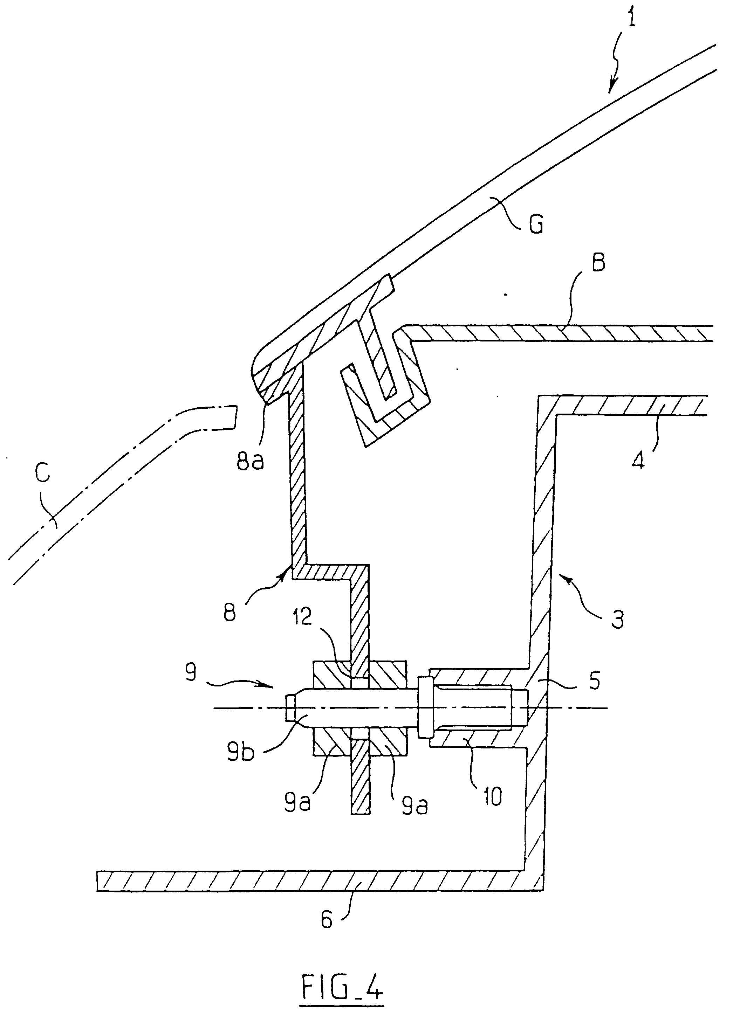

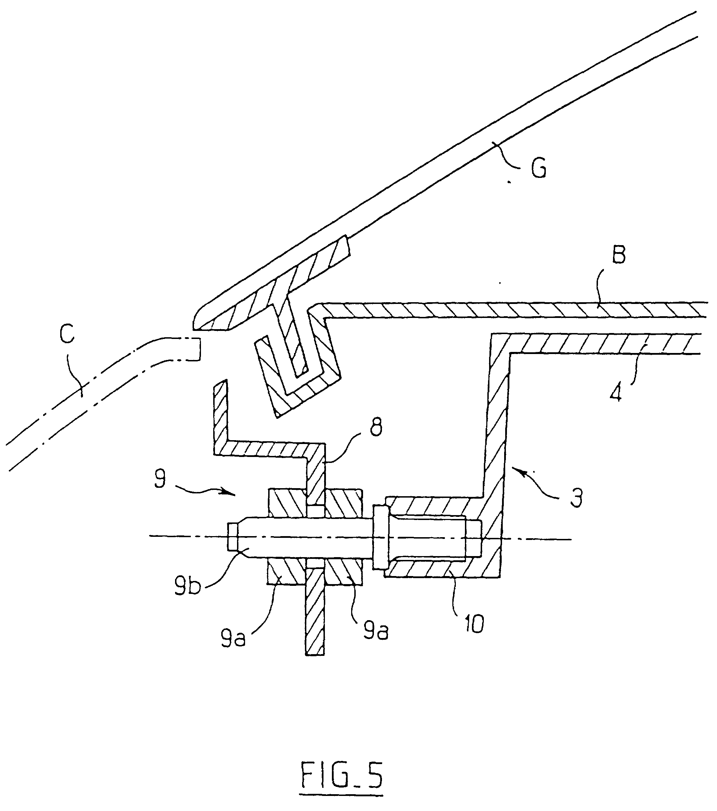

Une pièce intermédiaire 8 est fixée en deux points de la portion 5 de la pièce 3 formant support par l'intermédiaire de moyens 9 de type vis/écrou (figures 4 et 5).

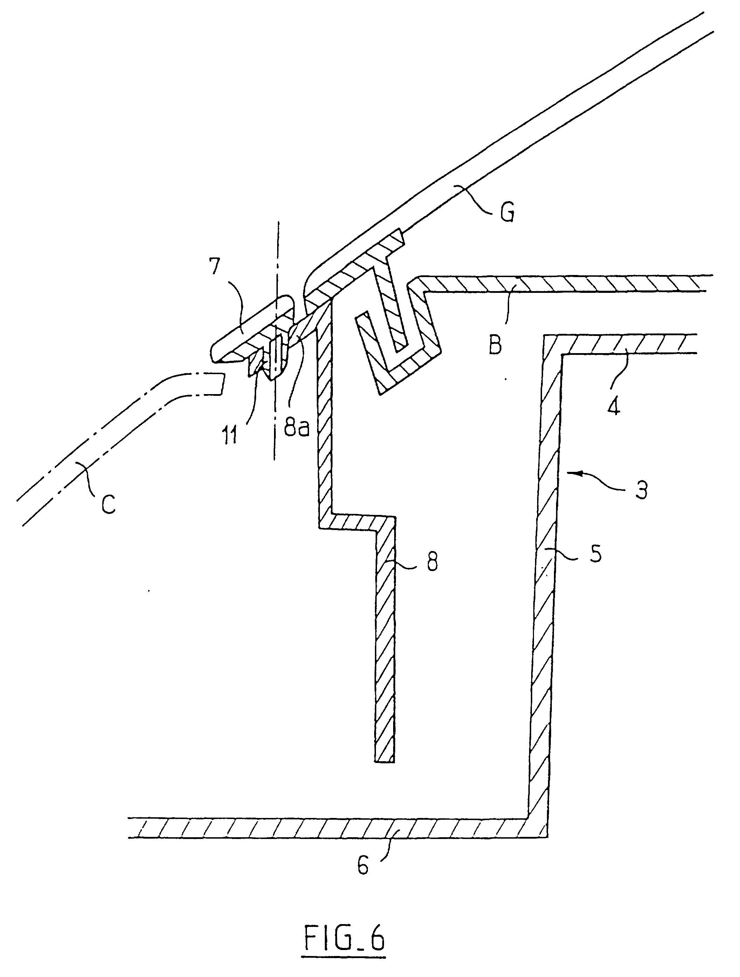

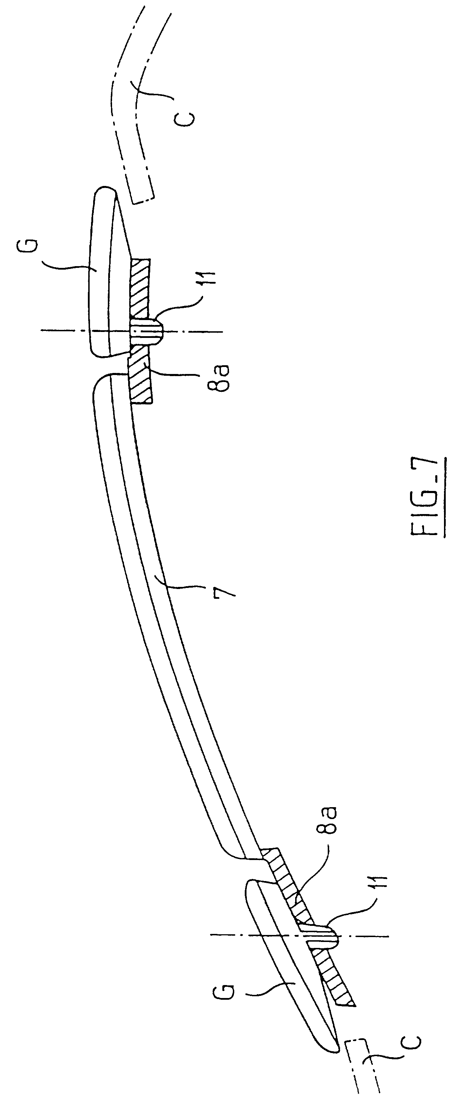

Cette pièce intermédiaire 8 est une plaque qui se termine par un méplat incliné 8a sur lequel se positionne les bords du cache 7, ainsi que les bords du reste de la glace G qui sont destinés à être en regard dudit cache 7 (figures 6 à 8).

Cette pièce intermédiaire 8 présente au droit du cache 7 et du reste de la glace G des orifices de centrage dans lesquels sont destinés à être reçus des pions de guidage 11 qui s'étendent en saillie à partir de ladite glace G et dudit cache 7.

Les moyens de fixation 9 sont des moyens qui autorisent le réglage de la position de la pièce 8 par rapport au support 4.

A cet effet, ainsi que le montrent les figures 4 et 5, lesdits moyens 9 comportent pour chacun des deux points de fixation deux écrous 9a qui engrènent avec une tige filetée 9b qui est elle-même par ailleurs vissée sur un plot 10 qui s'étend en saillie vers l'avant par rapport à la portion 5 de la pièce 3. La pièce intermédiaire 8 présente quant à elle au niveau de chacun des points de fixation un orifice 12 par lequel elle est passée sur la tige 9b

Lors du montage, les deux écrous 9a sont disposés de part et d'autre de ladite pièce 8, puis serrés contre celle-ci dans une position correspondant au réglage souhaité pour la distance entre la pièce 8 et la portion 5 de la pièce 3 formant support.

L'opérateur peut également utiliser le jeu important entre la vis 9b et les bords de l'orifice 12 pour régler la position de la pièce 8 par rapport aux axes des vis 9b.

Comme on l'aura compris, les moyens 9 permettent d'assurer un réglage de la position du méplat 8a, et donc de la glace G et du cache 7 par rapport à la carrosserie C du véhicule.

Comme on l'aura compris, lors d'opérations de montage, l'opérateur fixe la pièce support 4 sur la carrosserie C, le dispositif de lavage ayant été préalablement fixé sur la portée 6 que présente ladite pièce support. Puis l'opérateur règle la position de la pièce 8 et du cache 7. Il vient ensuite fixer le boîtier B du projecteur sur la carrosserie C en le positionnant de façon que les pions 11 de la glace G s'engagent dans les trous complémentaires que présente le méplat 8a.

Le projecteur peut ensuite être démonté à tout moment sans qu'il ne soit nécessaire d'intervenir sur le montage du dispositif de lavage.

On notera également qu'un autre avantage de l'invention est qu'elle permet de ne pas avoir à prévoir sur le boîtier B des moyens de fixation pour le dispositif de lavage.

## Revendications

1. Ensemble comportant un projecteur (1) de véhicule automobile et un dispositif de lavage télescopique (2) associé audit projecteur (1), le projecteur (1) comportant une glace (G) prolongée par un cache mobile (7) sous lequel le dispositif de lavage (2) est destiné à être escamoté lorsqu'il est au repos, **caractérisé en ce qu'**il comporte une pièce (3) formant support qui présente d'une part une portion (4) qui est destinée à recevoir au moins en partie le boîtier (B) du projecteur et qui présente des moyens (P) pour la fixation de ladite pièce (3) sur la carrosserie (C) du véhicule et d'autre part une portée (6), qui est reliée à ladite portion (4) par un décrochement (5), qui s'étend à l'extrémité de la pièce (3) destinée à être située vers l'avant du projeteur sur le véhicule et qui est en dessous, par rapport au projecteur, de ladite portion (4), des moyens permettant de fixer le dispositif de lavage télescopique (2) sur ladite portée (6).

2. Ensemble selon la revendication 1, **caractérisé en ce qu'**il comporte une pièce intermédiaire (8) qui présente des moyens qui permettent le centrage du cache mobile par rapport au reste de la glace, des moyens de fixation (9) permettant de fixer ladite pièce sur la pièce formant support (3).

3. Ensemble selon la revendication 2, **caractérisé en ce que** lesdits moyens de fixation (9) sont des moyens qui autorisent un réglage de la position de la pièce intermédiaire par rapport à la pièce formant support.

4. Ensemble selon la revendication 3, **caractérisé en ce que** lesdits moyens de fixation (9) comportent au moins une vis dont le filetage coopère avec le filetage de deux écrous destinés à être disposés de part et d'autre d'un orifice de fixation de la pièce intermédiaire et à être serrés contre celle-ci dans une position de réglage donnée.

5. Ensemble selon la revendication 4, **caractérisé en ce que** l'onfice présente un jeu de réglage par rapport à la vis.

6. Ensemble selon l'une des revendications 2 à 5, **caractérisé en ce que** la pièce intermédiaire (8) se termine par un méplat (8a) qui présente des moyens de centrage destinés à coopérer avec des moyens de centrage complémentaires que comportent le cache mobile et le reste de la glace

7. Ensemble selon la revendication 6, **caractérisé en ce que** les moyens de centrages comportent des pions de centrage (11) et des trous complémentaires.

8. Ensemble selon l'une des revendications 2 à 7, **caractérisé en ce que** la pièce intermédiaire (8) est fixée sur le décrochement (5) de la pièce formant support.

## Patentansprüche

1. Einheit mit einem Kraftfahrzeugscheinwerfer (1) und einer dem Scheinwerfer (1) zugeordneten teleskopischen Waschvorrichtung (2), wobei der Scheinwerfer (1) eine Scheibe (G) umfasst, die durch eine bewegliche Abdeckung (7) verlängert ist, unter der die Waschvorrichtung (2) eingefahren werden kann, wenn sie sich in Ruhestellung befindet,
**dadurch gekennzeichnet, dass** sie ein einen Halter bildendes Stück (3) umfasst, das einerseits ein Teil (4) aufweist, das dazu bestimmt ist, das Gehäuse (B) des Scheinwerfers wenigstens teilweise aufzunehmen und das Mittel (P) zum Befestigen des Stücks (3) auf der Karosserie (C) des Fahrzeugs aufweist, und andererseits eine Auflagefläche (6), die mit diesem Teil (4) durch einen Absatz (5) verbunden ist, der sich am Ende des Stücks (3) erstreckt, das dazu bestimmt ist, am Fahrzeug in Richtung der Scheinwerfervorderseite angeordnet zu sein, und der bezüglich des Scheinwerfers unterhalb des Teils (4) liegt, wobei Mittel das Befestigen der teleskopischen Waschvorrichtung (2) auf der Auflagefläche (6) ermöglichen.

2. Einheit nach Anspruch 1,
**dadurch gekennzeichnet, dass** sie ein Zwischenstück (8) umfasst, das Mittel aufweist, die das Zentrieren der beweglichen Abdeckung in Bezug auf das übrige Glas ermöglichen, wobei das Zwischenstück durch Befestigungsmittel (9) auf dem den Halter bildenden Stück (3) befestigt werden kann.

3. Einheit nach Anspruch 2,
**dadurch gekennzeichnet, dass** die Befestigungsmittel (9) Mittel sind, die es gestatten, die Position des Zwischenstücks in Bezug auf das den Halter bildende Stück einzustellen.

4. Einheit nach Anspruch 3,
**dadurch gekennzeichnet, dass** die Befestigungsmittel (9) wenigstens eine Schraube umfassen, deren Gewinde mit dem Gewinde zweier Muttern zusammenwirkt, die dazu bestimmt sind, zu beiden Seiten einer Befestigungsöffnung für das Zwischenstück angeordnet zu sein und in einer gegebenen Einstellposition mit diesem verschraubt zu werden.

5. Einheit nach Anspruch 4,
**dadurch gekennzeichnet, dass** die Öffnung bezüglich der Schraube ein Einstellspiel aufweist.

6. Einheit nach einem der Ansprüche 2 bis 5,
**dadurch gekennzeichnet, dass** das Zwischenstück (8) in einer Abflachung (8a) endet, die Zentriermittel zum Zusammenwirken mit komplementären Zentriermitteln aufweist, welche die bewegliche Abdeckung und das übrige Glas umfassen.

7. Einheit nach Anspruch 6,
**dadurch gekennzeichnet, dass** die Zentriermittel Zentrierstifte (11) und dazu komplementäre Öffnungen aufweisen.

8. Einheit nach einem der Ansprüche 2 bis 7,
**dadurch gekennzeichnet, dass** das Zwischenstück (8) auf dem Absatz (5) des den Halter bildenden Stücks befestigt ist.

## Claims

1. An assembly comprising a motor vehicle headlight (1) and a telescopic washing device (2) associated with the said headlight (1), the headlight (1) including a front glass (G) which is extended by a movable mask (7) under which the washing device (2) is arranged to be withdrawn when it is at rest, **characterised in that** it includes a support member (3) which has, firstly, a portion (4) which is adapted to receive, at least partly, the casing (B) of the headlight, and which has means (P) for fastening the said member (3) on the bodywork (C) of the vehicle, and secondly, a surface (6), which is joined to the said portion (4) through a stand-off element (5), the said surface extending at the end of the member (3) which is arranged to be situated at the front of the headlight on the vehicle, and being, with reference to the headlight, at a lower level than the said portion (4), with means for fastening the telescopic washing device (2) on the said surface (6).

2. An assembly according to Claim 1, **characterised in that** it includes an intermediate member (8) which has means for enabling the movable mask to be centred with respect to the remainder of the glass, with fastening means (9) enabling the said member to be fixed on the support member (3).

3. An assembly according to Claim 2, **characterised in that** the said fastening means (9) are means for enabling the position of the intermediate member to be adjusted with respect to the support member.

4. An assembly according to Claim 3, **characterised in that** the said fastening means (9) comprise at least one screw, the screw thread of which is in cooperation with the screw thread of two nuts which are arranged to be disposed on either side of a fastening hole in the intermediate member, and to be tightened against the latter in a given adjustment position.

5. An assembly according to Claim 4, **characterised in that** the hole has a clearance for adjustment with respect to the screw.

6. An assembly according to one of Claims 2 to 5, **characterised in that** the intermediate member (8) terminates in a flange (8a) of centring means adapted to cooperate with complementary centring means which are part of the movable mask and the remainder of the glass.

7. An assembly according to Claim 6, **characterised in that** both of the centring means include centring pins (11) and complementary holes.

8. An assembly according to one of Claims 2 to 7, **characterised in that** the intermediate member (8) is fixed on the stand-off element (5) of the support member.
